Europäisches Patentamt

(19) European Patent Office

Office européen des brevets

(11) Numéro de publication: **0 184 472**

**B1**

(12) # FASCICULE DE BREVET EUROPÉEN

(45) Date de publication du fascicule du brevet:
12.07.89

(51) Int. Cl.⁴: **A 61 C 13/225**

(21) Numéro de dépôt: **85401883.5**

(22) Date de dépôt: **26.09.85**

(54) **Dispositif de pose de prothèse dentaire adjointe.**

(30) Priorité: **06.10.84 FR 8415378**

(43) Date de publication de la demande:
**11.06.86 Bulletin 86/24**

(45) Mention de la délivrance du brevet:
**12.07.89 Bulletin 89/28**

(84) Etats contractants désignés:
**DE SE**

(56) Documents cité:
**EP-A-0 069 167**
**GB-A-2 085 303**
**GB-A-2 117 643**
**US-A-4 172 323**
**US-A-4 362 509**
**US-A-4 386 908**

(73) Titulaire: **Segura, Claude, 20 rue Claude Bernard,
F-66000 Perpignan (FR)**

(72) Inventeur: **Segura, Claude, 20 rue Claude Bernard,
F-66000 Perpignan (FR)**

(74) Mandataire: **Pinguet, André, CAPRI 28 bis, avenue
Mozart, F-75016 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet un dispositif de fixation amovible pour une prothèse dentaire adjointe, comme défini dans la première partie de la revendication 1.

On sait que lorsqu'une dent est manquante, il est connu de constituer un bridge, la fausse dent prenant appui sur les dents adjacentes, au moins en partie saines. Il s'agit d'une prothèse fixe. Lorsque plusieurs dents sont absentes, la technique classique consiste disposer, dans la bouche du patient, un appareil métallique portant un ensemble de fausses dents, appareil généralement désigné dans la technique par "squeletté" ou "stellite". Cet appareil prend appui sur la cavité maxillaire ou sur la mandibule. Toutefois, il est nécessaire de l'ancrer sur les dents restantes, suffisamment résistantes. La prothèse amovible est alors dite "adjointe". Cet ancrage est habituellement réalisé l'aide de crochets venant entourer les dents saines. Malheureusement, en raison de la présence des crochets, les dents qui étaient saines au moment de la pose des crochets le restent peu de temps, compte tenu des caries provoquées par le contact du métal sur les dents et des efforts qui sont transmis par l'appareil aux dents supportant les crochets. En raison de ces efforts latéraux, celles-ci ont tendance à se déchausser. De plus, le port de tels crochets est inesthétique.

Afin de remédier ces inconvénients notables, on a déjà proposé de remplacer les crochets sur les dents saines par des attachements permettant de fixer l'appareil d'une manière amovible en utilisant la technique utilisée pour la réalisation des couronnes. A cet effet, les dents saines concernées sont taillées en forme de tronc de cône de manière à constituer un pivot. La couronne prothétique est collée sur ce pivot à l'aide d'un ciment. Dans la méthode à laquelle il est fait référence, on soude sur la couronne, qui doit être en partie métallique, avant la pose de celle-ci, un attachement qui constitue habituellement une partie mâle, de dimensions plus réduites que celles de la partie femelle qui elle, est solidaire de l'appareil, l'ensemble constituant un disjoncteur horizontal, entièrement métallique. Il est ainsi possible d'implanter en bouche un appareil en évitant au patient le supplice des crochets. L'appareil, une fois posé, n'est plus normalement apparent et il en résulte pour le patient un confort intellectuel et fonctionnel.

Cette solution présente toutefois l'inconvénient d'être peu durable. La liaison mécanique entre l'appareil et les dents d'ancrage, compte tenu des efforts qu'elle doit supporter se détériore relativement rapidement. Et les attachements ou ancrages ainsi posés doivent être remplacés dans des délais relativement brefs. C'est ainsi que des solutions ont été envisagées afin de les soulager le plus possible de ces sollicitations. Le brevet GB-A-2 117 643 divulgue dans ce cadre une fixation comprenant un élément mâle prévu pour être ancré au sein d'une dent saine et un élément femelle lié rigidement à la prothèse, ces deux éléments pouvant s'emboîter l'un dans l'autre. Pour cela l'élément mâle comporte une rotule tandis que l'élément femelle est constitué par un cylindre creux ouvert à sa partie Inférieure et percé d'une fente latérale. Les deux pièces peuvent alors se déplacer relativement si bien que l'ancrage même se trouve moins sollicité et qu'il voit sa vie prolongée.

Il n'en reste pas moins vrai que ces dispositifs nécessitent un travail considérable du chirurgien dentiste qui doit tailler les dents support d'attachement. De ce fait, il détruit aussi une importante quantité de tissus sains. Une technique connue pour éviter cette détérioration consiste à coller ou à cimenter à la surface de la dent support une ailette qui présente un côté de forme et de surfaçage convenable. Par exemple le brevet US-A-4 386 908 présente comment une liaison convenable peut ainsi être réalisée entre la dent et l'ailette. Toutefois il se rapporte plutôt à des appareils orthodontiques dont le rôle est avant tout d'exercer des efforts horizontaux sur les dents afin de les aligner harmonieusement. Pour ce qui est des prothèses destinées entre autres à permettre la mastication, de tels collages n'ont pas encore été retenus. En effet il paraît peu probable qu'ils puissent remplacer les ancrages dans le cadre des dispositifs de fixation évoqués ci-dessus. L'interface dent-ailette aurait alors à supporter d'importants efforts de cisaillement auxquels la moindre solidité d'un collage ne pourrait vraisemblablement pas résister longtemps.

C'est ainsi que la présente invention a pour but de fournir une fixation de prothèse dentaire qui évite toute détérioration des dents support grâce au recours à la technique du collage d'une ailette, mais tout en assurant la pérennite de ce collage. A cette fin, elle cherche à éliminer les efforts auxquels l'interface dent-ailette pourrait être soumise.

Le problème défini ci-dessus est résolu par le dispositif selon la revendication 1.

Ce dispositif comporte la particularité d'être aisément démontable si bien que la prothèse devient amovible. Par ailleurs il respecte l'esthétique ainsi que l'intégrité de la dentition saine restante.

Il est en outre avantageux de rendre le diamètre extérieur de ladite tête de rotule est de préférence supérieur au diamètre intérieur de ladite coiffe placée dans ledit cylindre creux.

De la sorte, le contact métal sur métal conduisant à une usure rapide de la liaison est remplacé par contact métal sur plastique. La liaison mécanique bénéficie ainsi de la souplesse du plastique d'une part, et d'autre part, il est aisé, en cas d'usure de remplacer la coiffe plastique en une minute environ.

Ainsi, il n'est plus nécessaire comme précédemment de tailler les dents saines pour poser des couronnes sur les dents devant constituer l'ancrage de l'appareil. Une attelle solidaire de la dent, invisible puisque placée contre la partie interne de celle-ci, assure par collage la liaison mécanique nécessaire au maintien de l'appareil à l'intérieur de la bouche sans que le patient perçoive, au bout d'un temps très court, la présence de celui-ci. Il est possible d'avoir par exemple recours à une colle de type cyanoacrylate. Le collage est encore amélioré si ladite ailette est obtenue par moulage à haute fusion de manière à épouser parfaitement le profil de la dent sur laquelle elle doit être collée.

D'autres caractéristiques et avantages de l'invention apparaîtront au cours de la description qui va suivre d'un mode de réalisation particulier, donné uniquement à titre d'exemple non limitatif, en regard des dessins qui représentent:

- la Fig. 1, une vue en perspective d'une mandibule sur laquelle est posée une prothèse selon l'invention
- la Fig. 2, une vue en perspective du montage d'un attachement;
- la Fig. 3, une coupe selon la ligne III-III de la Fig. 2.

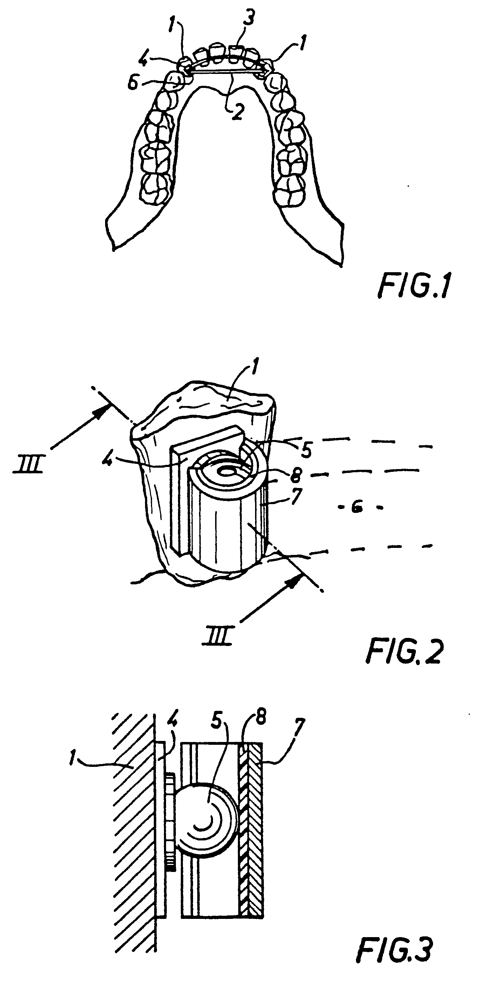

Sur la Fig. 1, est représentée une mandibule dans laquelle subsistent au moins deux dents saines 1, susceptibles de servir d'ancrage à un appareil 2. L'appareil 2 porte un ensemble de dents de prothèse 3 destinées à venir masquer l'édentation sectorielle se trouvant entre les dents 1.

Comme cela apparaît mieux sur la Fig. 2, chaque dent 1 porte sur sa face arrière une ailette coulée métallique collée contre les faces arrière de la dent à l'aide d'une résine adaptée. De préférence, la plaquette 4 est soumise, avant son collage, à un mordançage électrolytique destiné à augmenter sa surface réelle et a permettre une meilleure adhérence sur les faces correspondantes de la dent 1. Sur la plaquette 4 est soudé un attachement 5, qui forme la partie mâle d'un assemblage de type rotulien dont la partie femelle 7 est solidaire d'une attelle 6 elle-même solidaire de l'appareil 2 (FIG. 1).

Selon un mode préférentiel de réalisation de l'invention, l'attachement 5 est constitué par une rotule, la partie femelle 7 de l'attelle 6 étant constituée par un cylindre creux. Ainsi, la partie femelle 7 peut pivoter autour de la rotule ce qui est avantageux, au moment de la pose de l'appareil en bouche mais également après cette pose, l'appareil présentant un certain débattement permettant d'éviter une trop grande traction sur les dents 1 qui, dans le cas des crochets, conduisait à des déchaussements.

Selon une caractéristique de l'invention, l'attachement 5 est revêtu d'une coiffe plastique 8, également cylindrique, la coiffe 8 étant interposée entre la partie mâle 5 et la partie femelle 7 de l'attachement. On évite ainsi le contact métal sur métal qui conduit à une usure rapide. De préférence, le diamètre interne de la coiffe 8 est légèrement inférieur au diamètre de la rotule 5 de sorte que la pose de l'appareil nécessite un effort de pression déformant le plastique. Lorsque la rotule 5 a atteint son niveau d'utilisation, le plastique a tendance à fluer de part et d'autre de la rotule de sorte que celle-ci forme automatiquement son siège.

La matière plastique employée est, par exemple, du polyéthylène de qualité haute pression, ou toute autre matière plastique biocompatible. En cas d'usure de la liaison, l'appareil peut être facilement démonté et la coiffe 8 remplacée. Il n'est plus nécessaire d'intervenir ni sur la rotule 5, ni sur l'attelle 6. Par cette mobilité, l'appareil remplit parfaitement sa fonction de prothèse adjointe.

Toutefois, tous les types d'attachement existant sur le marché peuvent être mis en oeuvre avec le procédé selon l'invention. Ce dispositif peut également avoir des applications sur prothèses hybrides de type conjointe de restauration partielle, céramo-métallique ou autre et adjointe de relais, notamment dans les classes 1 à 5 de Kennedy.

Bien entendu, la forme de l'appareil et le nombre de dents sur lesquelles il est ancré peuvent varier en fonction du problème à résoudre.

La pose d'un appareil selon l'invention est effectuée de la manière suivante après réalisation de celui-ci, on colle sur les dents d'ancrage 1 soit des ailettes coulées 4 sur lesquelles ont été soudées les parties mâles 5 d'attachement, soit encore des parties mâles intégrées à une plaquette, par exemple en acier inoxydable. Puis, les coiffes 8 sont disposées sur les rotules 5. Les parties femelles 7 des attelles 6 sont alors glissées sur la coiffe et l'appareil prend sa position d'utilisation à l'intérieur de la bouche.

Il va de soi que de nombreuses variantes peuvent être apportées, notamment par substitution de moyens techniquement équivalents sans pour cela sortir du cadre de la présente invention comme définie dans les revendications ci-jointes.

## Revendications

1. Dispositif de fixation amovible pour une prothèse dentaire adjointe (2) comprenant:

- assujettie à une dent saine (1), une partie mâle (5) munie d'une tête de rotule, et
- solidaire de ladite prothèse (2), une partie femelle (7) d'une forme creuse et verticalement fendue, adaptée pour recevoir intérieurement ladite tête de rotule,

caractérisé en ce que:
1. ladite partie mâle (5) est également munie d'une ailette (4) métallique moulée pour être fixée définitivement par collage à ladite dent saine (1); en ce que
2. ladite partie femelle (7) est d'une configuration cylindrique et en ce que
3. une coiffe (8) en matière plastique interchangeable, également cylindrique, dont les deux bases opposées sont ouvertes, est interposée entre ladite partie mâle (5) et ladite partie femelle (7).

2. Dispositif de fixation amovible pour une prothèse dentaire adjointe (2) selon la revendication 1, caractérisé en ce que le diamètre extérieur de ladite tête de rotule est supérieur au diamètre intérieur de ladite coiffe (8) interposée entre ladite partie mâle (5) et ladite partie femelle (7).

3. Dispositif de fixation amovible pour une prothèse dentaire adjointe (2) selon l'une quelconque des revendications précédentes, caractérisé en ce que ladite ailette (4) est obtenue par moulage à haute fusion de manière à épouser parfaitement le profil de la dent (1) sur laquelle elle doit être collée.

**Patentansprüche**

1. Lösbare Befestigungsvorrichtung für eine Teil-Zahnprothese (2) mit

- einem Einsteckteil (5) mit einem Kugelkopf, das an einem gesunden Zahn (1) befestigt ist, und

- einem fest mit der Prothese (2) verbundenen hohlen und senkrecht geschlitzten Hülsenteil (7) das geeignet ist, in seinem Inneren den Kugelkopf aufzunehmen,

dadurch gekennzeichnet, daß

1. das Einsteckteil (5) weiter eine Metallplatte (4) aufweist, die so gegossen ist, daß sie endgültig durch Kleben an dem gesunden Zahn befestigt werden kann, daß

2. das Hülsenteil (7) von zylindrischer Form ist, und daß

3. eine ebenfalls zylindrische Kappe (8) aus austauschbarem Plastikmaterial, deren beide entgegengesetzte Basen offen sind, zwischen das Einsteckteil (5) und das Hülsenteil (7) eingefügt ist.

2. Lösbare Befestigungsvorrichtung für eine Teil-Zahnprothese (2) nach Anspruch 1, dadurch gekennzeichnet, daß der äußere Durchmesser des Kugelkopfs größer ist als der innere Durchmesser der zwischen das Einsteckteil (5) und das Hülsenteil (7) eingefügten Kappe (8).

3. Lösbare Befestigungsvorrichtung für eine Teil-Zahnprothese (2) nach einem beliebigen der vorhergehenden Ansprüche, dadurch gekennzeichnet, daß die Platte (4) durch Guß mit hohem Schmelzgrad erhalten wird, um sich perfekt an das Profil des Zahns (1) anzupassen, auf den sie aufgeklebt werden soll.

**Claims**

1. Device for the removable fixation of a partial denture (2) comprising:

- fixed to one healthy tooth (1), a male member (5) provided with a ball joint, and

- unitary with said denture (2), a female part (7) of a hollow form, vertically slit, adapted to receive inside said ball joint,

characterized in that

1. said male member (5) is also provided with a moulded metal tab (4) for being definitely fixed by glue to said healthy tooth (1) in that

2. said female part (7) is of cylindrical shape and in that

3. a plastic interchangeable cap (8), also cylindrical, the two bases of which are open, is interposed between said male member (5) and said female part (7).

2. Device for the removable fixation of a partial denture (2) according to claim 1, characterized in that the outside diameter of said ball joint is greater than the inside diameter of said cap (8), interposed between said male member (5) and said female part (7).

3. Device for the removable fixation of a partial denture (2) according to anyone of the preceding claims, characterized in that said tap (4) is obtained by moulding at high fusion, so that to perfectly match the tooth (1) profile, on which It is to be glued.

*FIG.1*

*FIG.2*

*FIG.3*